# EUROPÄISCHE PATENTSCHRIFT

(11) **EP 3 941 650 B1**
(45) Veröffentlichungstag und Bekanntmachung des Hinweises auf die Patenterteilung: **01.01.2025**
(21) Anmeldenummer: 19714559.2
(22) Anmeldetag: 19.03.2019
(51) Int. Cl.: B08B 3/14, B08B 15/04, C02F 5/08, B01D 29/27, A47L 7/00

(54) **VERFAHREN ZUM BETREIBEN EINES BEARBEITUNGSSYSTEMS**
METHOD FOR OPERATING A PROCESSING SYSTEM
PROCÉDÉ DE FONCTIONNEMENT D'UN SYSTÈME DE TRAITEMENT

(43) Veröffentlichungstag der Anmeldung: 26.01.2022
(73) Patentinhaber: Hilti Aktiengesellschaft, 9494 Schaan (LI)
(72) Erfinder: HOFER, Markus, 71739 Oberriexingen (DE); HOLCH, Markus, 74544 Michelbach (DE)
(74) Vertreter: Hilti Aktiengesellschaft Corporate Intellectual Property
(86) Internationale Anmeldenummer: PCT/EP2019/056845
(87) Internationale Veröffentlichungsnummer: WO 2020/187400

(56) Entgegenhaltungen:
- WO-A1-01/08543
- DE-A1- 10 352 921
- DE-A1- 102014 107 732
- DE-C1- 10 223 266
- DE-U1- 202007 018 176
- DE-U1- 202014 101 641

## Beschreibung

Die vorliegende Erfindung betrifft ein Verfahren zum Betreiben eines Bearbeitungssystems, bei dem mit einem Bearbeitungswerkzeug Material abgetragen und einem mit dem Bearbeitungswerkzeug über einen Flüssigkeitskreislauf, in dem eine Reinigungsflüssigkeit umgewälzt wird, verbundenen Sauggerät zugeführt und darin abgeschieden wird.

Bei einem Bearbeitungssystem der vorstehend genannten Art kommt als Bearbeitungswerkzeug beispielsweise ein Kernbohrgerät, ein Schneidgerät oder ein Fräsgerät zum Einsatz. Das Bearbeitungswerkzeug ist mit dem Sauggerät typischerweise über eine Zufuhrleitung für die Reinigungsflüssigkeit verbunden. Reinigungsflüssigkeit, insbesondere Wasser, strömt vom Sauggerät durch die Zufuhrleitung hindurch zum Bearbeitungswerkzeug. Das mit dem Bearbeitungswerkzeug abgetragene Material kann von der Reinigungsflüssigkeit erfasst und über eine das Bearbeitungswerkzeug mit dem Sauggerät verbindende Saugleitung vom Sauggerät angesaugt werden. Das Material wird beispielsweise in einem Schmutzbehälter des Sauggerätes abgeschieden. Hierbei kann vorgesehen sein, dass ein im Schmutzbehälter angeordnetes Filterelement durchströmt wird und das Material zurückhält. Die gereinigte Reinigungsflüssigkeit kann beispielsweise mittels eines Pumpaggregates aus dem Schmutzbehälter in die Zufuhrleitung gefördert werden.

Ein Sauggerät als Bestandteil eines Bearbeitungssystems der vorstehend genannten Art ist zum Beispiel in der DE 10 2014 107 732 A1 beschrieben. Ein Bearbeitungssystem ist zum Beispiel in der DE 20 2007 018 176 U1 offenbart.

Beispielsweise wird in der DE 20 2014 101 641 U1 ein Staubsaugerfilterbeutel offenbart, der ein antimikrobielles Material aufweist, das auf einer natürlich vorkommenden organischen Säure oder Base basiert.

Die WO 2001 08 543 A1 beschreibt ein Verfahren zum Staubsaugen, wobei der Staub zunächst in einem Staubfilterbeutel gesammelt und nachfolgend entsorgt werden kann. Dabei kann eine Geruchsadsorbierung erfolgen, bei der ein Adsorbens, wie beispielsweise Aktivkohle, verwendet wird, um einen Anfangsgeruchsschwall zu mindern oder zu unterbinden.

Aufgabe der vorliegenden Erfindung ist es, ein Verfahren zum Betreiben eines Bearbeitungssystems und ein Bearbeitungssystem bereitzustellen, mit dem eine zuverlässigere Funktion des Bearbeitungssystems gewährleistet wird.

Diese Aufgabe wird durch ein erfindungsgemäßes Verfahren zum Betreiben eines Bearbeitungssystems gelöst, bei welchem Bearbeitungssystem mit einem Bearbeitungswerkzeug Härtebildner umfassendes Material abgetragen und einem mit dem Bearbeitungswerkzeug über einen Flüssigkeitskreislauf, in dem eine Reinigungsflüssigkeit umgewälzt wird, verbundenen Sauggerät zugeführt und darin abgeschieden wird, wobei mindestens ein Enthärtungsmedium im Flüssigkeitskreislauf enthalten ist, wobei das mindestens eine Enthärtungsmedium ortsfest im Flüssigkeitskreislauf eingesetzt wird und/oder wobei das mindestens eine Enthärtungsmedium der Reinigungsflüssigkeit bei Inbetriebnahme des Bearbeitungssystems zugegeben wird.

In die vorliegende Erfindung fließt die Überlegung mit ein, dass bei einem typischen Einsatz des Bearbeitungssystems, beispielsweise auf einer Baustelle, Material abgetragen wird, das Härtebildner und insbesondere kationische Härtebildner wie Ca²⁺ und Mg²⁺ enthalten kann. Infolge des Materialabtrags können die Härtebildner in gelöster Form in der Reinigungsflüssigkeit mitgeführt werden. Durch zusätzlichen Materialabtrag kann es allerdings passieren, dass die Löslichkeitsgrenze gelöster Härtebildner erreicht oder überschritten wird und Härtebildner, zum Beispiel als Carbonate, aus der Lösung ausfallen. Dies könnte beispielsweise infolge der Erwärmung in einem Wärmetauscher des Bearbeitungswerkzeugs geschehen, wenn die Reinigungsflüssigkeit zugleich zum Kühlen des Bearbeitungswerkzeugs eingesetzt wird. Durch ausfallendes Material kann der Flüssigkeitskreislauf zumindest teilweise verstopft und die Funktion des Bearbeitungssystems beeinträchtigt werden. Unter Umständen ist das Bearbeitungswerkzeug zu zerlegen, um die Störung zu beseitigen.

Bei der vorliegenden Erfindung kann dieses Problem dadurch überwunden werden, dass im Flüssigkeitskreislauf mindestens ein Enthärtungsmedium enthalten ist. Mittels des Enthärtungsmediums können die Härtebildner zumindest teilweise aus der Lösung entfernt und die Sättigung der Reinigungsflüssigkeit mit Härtebildnern verzögert werden. Dies erlaubt es, mit dem Bearbeitungssystem mehr Material abzutragen, bevor es zum Ausfallen von Material aus der Reinigungsflüssigkeit kommt. Die Wahrscheinlichkeit, dass sich der Flüssigkeitskreislauf während des üblichen Arbeitseinsatzes mit Material zusetzt, kann dadurch verringert werden. Etwaige Betriebsstörungen des Bearbeitungssystems können vermieden werden, und die Einsatzzeit kann gesteigert werden, wodurch die Akzeptanz für den Einsatz des Systems auf der Seite der Bedienperson gesteigert wird. Der Wartungsaufwand für das Bearbeitungssystem ist verringert und die Betriebssicherheit erhöht.

Günstigerweise ist die Menge des Enthärtungsmediums so bemessen, dass dessen Wirkung zumindest so lange vorhält, bis beim bestimmungsgemäßen Einsatz des Bearbeitungssystems ein Wechsel der Reinigungsflüssigkeit im Flüssigkeitskreislauf oder der Wechsel eines Filterelementes im Sauggerät erforderlich ist. Der Benutzer wird dadurch nicht in seiner Arbeit eingeschränkt und kann das Enthärtungsmedium bei typischen Umrüst- oder Wartungsarbeiten zugeben.

Vorzugsweise hält die Wirkung des Enthärtungsmediums für zumindest einen Arbeitstag vor, bei bestimmungsgemäßem Einsatz des Bearbeitungssystems.

Als vorteilhaft erweist es sich insbesondere, wenn mittels des mindestens einen Enthärtungsmediums die Carbonathärte in der Reinigungsflüssigkeit verringert wird. Dadurch lässt sich die "temporäre Härte" verringern, die beispielsweise durch Härtebildner wie Ca²⁺ und Mg²⁺ entsteht, wobei jedoch vorzugsweise auch Härte infolge des Eintrags von Ba²⁺ und Sr²⁺ verringert werden kann. Durch die Verringerung der Carbonathärte wird die Wahrscheinlichkeit verringert, dass die Härtebildner insbesondere als Carbonate ausfallen und den Flüssigkeitskreislauf verstopfen.

Günstig ist es, wenn das mindestens eine Enthärtungsmedium ein Komplexbildner ist oder einen solchen umfasst. Durch Komplexierung können die Härtebildner, beispielsweise Ca²⁺ und Mg²⁺, insbesondere stöchiometrisch gebunden werden. Bei fortwährendem Materialabtrag können zusätzlich eingebrachte Härtebildner in Lösung gehalten werden, bevor Material ausfällt.

Günstigerweise kann vorgesehen sein, dass das mindestens eine Enthärtungsmedium ein Ionenaustauschmedium ist oder ein solches umfasst. Durch Ionenaustausch können Härtebildner, insbesondere Ca²⁺ und Mg²⁺, gebunden werden.

Es kann vorgesehen sein, dass im Flüssigkeitskreislauf ein Enthärtungsmedium oder zwei oder mehr Enthärtungsmedien enthalten sind.

Das Enthärtungsmedium kann beispielsweise MGDA (Methylglycindiessigsäure Trinatriumsalz) sein. Beispielsweise haben Versuche eines Bearbeitungssystems mit einem Kernbohrgerät gezeigt, dass 250g MGDA für 5 Kernbohrungen in Beton eingesetzt werden konnten, ohne dass abgetragenes Material im Flüssigkeitskreislauf ausgefallen ist.

Das Enthärtungsmedium kann beispielsweise GLDA (Tetranatrium-N,N-bis(carboxylatomethyl)-L-glutamat) sein.

Das Enthärtungsmedium kann beispielsweise NTA (Nitrilotriessigsäure) sein.

Das Enthärtungsmedium kann beispielsweise EDTA (Ethylendiamintetraessigsäure) sein.

Das Enthärtungsmedium kann beispielsweise DTPA (Diethylentriaminpentaessigsäure) sein.

Das Enthärtungsmedium kann beispielsweise PDTA (Propylendiamintetraessigsäure) sein.

Das Enthärtungsmedium kann beispielsweise ein Phosphat oder Phosphonat sein.

Das Enthärtungsmedium kann beispielsweise ein Citrat sein.

Das Enthärtungsmedium kann beispielsweise ein Zeolith sein.

Das Enthärtungsmedium kann beispielsweise ein Polycarboxylat sein.

Es versteht sich, dass der Fachmann die Art und die Menge und/oder Konzentration des mindestens einen Enthärtungsmediums in der Reinigungsflüssigkeit abhängig vom Arbeitseinsatz und insbesondere Menge und Art des abgetragenen Materials einstellen kann. Obige Menge für MGDA bezieht sich zum Beispiel auf ein Bearbeitungssystem mit einer Menge von ca. 10 I bis 20 I Wasser im Flüssigkeitskreislauf. Da allerdings die natürliche Härte von Wasser deutlich geringer ist als die Härte, die bei Arbeiten wie Kernbohrungen in Beton entsteht, wird der Fachmann Art und/oder Menge des Enthärtungsmediums abhängig vom Arbeitseinsatz wählen.

Vorteilhaft kann es sein, wenn die Reinigungsflüssigkeit angesäuert wird. Geht die Härte der Reinigungsflüssigkeit zum Beispiel auf Calciumcarbonat zurück, kann durch Ansäuern mit Essigsäure Calciumacetat gebildet werden, dessen Löslichkeit gegenüber der Löslichkeit von Calciumcarbonat deutlich erhöht ist. In entsprechender Weise kann beispielsweise durch Ansäuern mittels Zitronensäure Calciumcitrat oder durch Ansäuern mittels einer mineralischen Säure ein andersartiges, leicht lösliches Salz gebildet werden (beispielsweise Calciumchlorid mittels Salzsäure).

Als vorteilhaft erweist es sich, wenn das mindestens eine Enthärtungsmedium mit der Reinigungsflüssigkeit im Flüssigkeitskreislauf mitgeführt wird. Dies weist den Vorteil auf, dass die Wirkung des Enthärtungsmediums im gesamten Kreislauf genutzt werden kann. Beispielsweise ist das Enthärtungsmedium in der Reinigungsflüssigkeit gelöst.

Vorgesehen ist, dass das mindestens eine Enthärtungsmedium ortsfest im Flüssigkeitskreislauf eingesetzt wird. Beispielsweise wird ein Ionenaustauschmedium in einer Patrone eingesetzt, die in den Flüssigkeitskreislauf geschaltet ist und insbesondere Bestandteil des Sauggerätes sein kann. Die zugeführte Reinigungsflüssigkeit durchströmt das Ionenaustauschmedium, wodurch die Härtebildner in diesem gebunden werden und der Reinigungsflüssigkeit die Härte entzogen wird.

Wie bereits erwähnt, kann beispielsweise mittels Komplexierung eine stöchiometrische Bindung von Härtebildnern erfolgen.

Als vorteilhaft erweist es sich, wenn das mindestens eine Enthärtungsmedium adsorptionshemmend ist. Beispielsweise ist die Möglichkeit gegeben, den "Threshold"-Effekt oder Schwelleneffekt auszunützen. Hierbei kann das Enthärtungsmedium selbst bei sehr niedrigen, unterstöchiometrischen Konzentrationen die Bildung eines Niederschlags in der Reinigungsflüssigkeit verhindern oder zumindest stark verzögern. Das Enthärtungsmedium kann beispielsweise die Oberfläche von sich zuerst bildenden Mikrokristallen durch Adsorption blockieren und dadurch die weitere Anlagerung von Härtebildnern und die Bildung größerer Kristalle blockieren. Auf diese Weise kann zum Beispiel Calciumcarbonat in Lösungen stabilisiert werden und ein Ausfallen vermieden werden.

Das mindestens eine Enthärtungsmedium kann in unterschiedlicher Form zugegeben werden. Beispielsweise wird das Enthärtungsmedium der Reinigungsflüssigkeit in ungelöster Form zugegeben und darin gelöst, zum Beispiel in Form von Pulver, Granulat, in gepresster Form als Tablette, kristallin als Salz o.ä.

Es kann vorgesehen sein, dass das Enthärtungsmedium in zumindest teilweise gelöster Form zugegeben wird. Zum Beispiel kann von der Bedienperson bei Arbeitsaufnahme ungelöstes Enthärtungsmedium durch Anrühren insbesondere mit Wasser aufgelöst und der Reinigungsflüssigkeit zugegeben werden.

Das Enthärtungsmedium kann zusätzlich zur eingangs genannten Wirkung weitere Wirkungen aufweisen und zu diesem Zweck beispielsweise mindestens einen weiteren Stoff umfassen.

Das mindestens eine Enthärtungsmedium kann der Reinigungsflüssigkeit bei Inbetriebnahme des Bearbeitungssystems zugegeben werden.

Vorteilhafterweise ist vorgesehen, dass der Bedienperson vom Bearbeitungssystem ein Hinweis über die erforderliche oder vorteilhafte Zugabe des mindestens einen Enthärtungsmediums bereitgestellt wird. Beispielsweise ist am Sauggerät und/oder am Bearbeitungswerkzeug eine Hinweiseinheit vorhanden, insbesondere optisch oder akustisch, über die die Bedienperson bei Inbetriebnahme einen entsprechenden Hinweis erhält.

Von Vorteil ist es, wenn ein von der Reinigungsflüssigkeit durchströmtes Filterelement im Sauggerät angeordnet wird, um das Material abzuscheiden. Die zugeführte Reinigungsflüssigkeit kann das Filterelement durchströmen. Das Material wird dadurch zurückgehalten und dem Bearbeitungswerkzeug nicht erneut zugeführt. Nach Arbeitsende kann das Filterelement zusammen mit dem zurückgehaltenen Material entsorgt werden.

Als Bearbeitungswerkzeug wird zum Beispiel ein Kernbohrgerät, ein Schneidgerät oder ein Fräsgerät verwendet.

Eine Verpackungseinheit zur Verwendung bei einem Verfahren der vorstehend beschriebenen Art umfasst mindestens ein von Flüssigkeit durchströmbares Filterelement, das im Sauggerät des Bearbeitungswerkzeugs angeordnet werden kann, um mittels der Reinigungsflüssigkeit zugeführtes Material zurückzuhalten sowie, in verpackter Form, ein Enthärtungsmedium.

Die Verpackungseinheit erleichtert der Bedienperson die Nutzung des Bearbeitungssystems. Kommt das Filterelement mit dem Sauggerät zum Einsatz, kann die Bedienperson derselben Verpackungseinheit das Enthärtungsmedium entnehmen. Die gemeinsame Darreichung des Filterelementes und des Enthärtungsmediums erinnert die Bedienperson anwenderfreundlich daran, zusätzlich zum Filterelement auch das Enthärtungsmedium einzusetzen.

Bei der Anwendung kann die das abgetragene Material mitführende Flüssigkeit, insbesondere Wasser, das Filterelement durchströmen. Die mitgeführten Partikel werden im Filterelement zurückgehalten und können nach Arbeitsende mit diesem entsorgt werden.

Eine Porengröße des Filtermaterials (mittlerer Durchmesser) kann im Mittel zum Beispiel ungefähr 10 µm bis 100 µm betragen, vorzugsweise ungefähr 15 µm bis 75 µm.

Das mindestens eine Filterelement ist beispielsweise ein Beutel. Der Beutel wird zum Beispiel in einen Schmutzbehälter des Sauggerätes eingelegt oder eingehängt.

Der Beutel ist beispielsweise tüten- oder sackförmig ausgestaltet mit einer Bodenwand, einer Seitenwand und einem Rand der Seitenwand, der eine Öffnung des Beutels einfasst. Ein derartiger Beutel kann beispielsweise in einen Schmutzbehälter des Sauggerätes eingehängt oder eingelegt werden, wobei insbesondere der Rand über einen Rand des Schmutzbehälters gestülpt wird. Zum Beispiel ist der Schmutzbehälter in einem Unterteil des Sauggerätes gebildet, und der Rand des Schmutzbehälters ist ein oberer Rand, auf den ein Oberteil des Sauggerätes aufgesetzt wird. Hierdurch kann zugleich der Beutel am Schmutzbehälter fixiert werden.

Bei einer bevorzugten Ausführungsform kann vorgesehen sein, dass der Beutel im Wesentlichen geschlossen ist und eine Eingriffsöffnung aufweist, zum Beispiel mit einem Durchmesser von einigen Zentimetern. In die Eingriffsöffnung kann zum Beispiel ein Saugstutzen am Sauggerät eingreifen. Die das Material mitführende Flüssigkeit gelangt auf diese Weise zielsicher in den Beutel.

Das Filterelement, insbesondere der Beutel, kann ein Halteelement umfassen oder bilden zum Fixieren an einem korrespondierenden Halteelement am Sauggerät, speziell am Schmutzbehälter. Beispielsweise kann das Halteelement zur kraft- und/oder formschlüssigen Verbindung mit dem Sauggerät ausgebildet sein. Bei einem Beutel der vorstehend genannten Art mit einer Eingriffsöffnung ist insbesondere vorgesehen, dass das Halteelement einen Rand der Eingriffsöffnung ausbildet, d.h. der Saugstutzen kann gewissermaßen durch das Halteelement und die Eingriffsöffnung hindurch in den Beutel hineinragen. Durch das Halteelement wird vorteilhafterweise ein Aufreißen des Beutels am Rand der Eingriffsöffnung auch bei hoher Beladung vermieden. Vorgesehen sein kann, dass der Beutel ein Abdeckelement zum Verschließen der Eingriffsöffnung umfasst. Beim Entnehmen des Beutels aus dem Sauggerät kann dadurch vermieden werden, dass das zurückgehaltene Material unbeabsichtigterweise durch die Eingriffsöffnung hindurch aus dem Filterelement gelangt.

Das mindestens eine Filterelement besteht vorzugsweise ganz oder teilweise aus einem Vliesmaterial.

Es kann vorgesehen sein, dass das Enthärtungsmedium in fester oder in flüssiger Form vorliegt.

Die Verpackungseinheit umfasst vorzugsweise mehrere Filterelemente.

Günstig ist es, wenn das Enthärtungsmedium portioniert verpackt ist, wobei einem jeweiligen Filterelement eine vorgegebene, separat verpackte Menge des Enthärtungsmediums zugeordnet ist. Dies erleichtert der Bedienperson die Handhabung. Die Bedienperson kann ein Filterelement und eine Einheit der verpackten Menge des Enthärtungsmediums entnehmen. Durch die bereits portionierte Menge ist es für die Bedienperson nicht erforderlich, die Menge des Enthärtungsmediums selbst zu bestimmen.

Das verpackte Enthärtungsmedium ist bei einer bevorzugten Ausführungsform in das mindestens eine Filterelement eingelegt oder eingewickelt. Beim Anordnen des Filterelementes im Sauggerät erkennt die Bedienperson, dass auch das Enthärtungsmedium anzuwenden ist, wobei die erforderliche Menge an Enthärtungsmedium bei Inbetriebnahme des Bearbeitungssystems enthalten ist. Beispielsweise ist das portioniert verpackte Enthärtungsmedium, wie vorstehend erläutert, in ein beutelförmiges Filterelement eingelegt.

Vorgesehen sein kann, dass das Enthärtungsmedium entnehmbar in einem Gebinde bevorratet ist, das einer Mehrzahl von Filterelementen zugeordnet ist. Beispielsweise kann die Bedienperson dem Gebinde flüssiges oder festes Enthärtungsmedium in gewünschter Menge entnehmen.

Günstig ist es, wenn das Enthärtungsmedium mittels einer Umhüllung verpackt ist.

Von Vorteil ist es, wenn die Umhüllung wasserlöslich ist. Dies ist insbesondere dann günstig, wenn das Enthärtungsmedium portioniert verpackt und einem jeweiligen Filterelement zugeordnet ist. Die Handhabung wird der Bedienperson erheblich erleichtert. Eine Einheit verpackten Enthärtungsmediums kann beispielsweise in einen Schmutzbehälter des Sauggerätes eingelegt und dieses für den Betrieb mit Wasser befüllt werden. Löst sich die Umhüllung auf, wird das Enthärtungsmedium freigesetzt.

Ein Bearbeitungssystem zur Durchführung eines Verfahrens der vorstehend beschriebenen Art umfasst ein Sauggerät und ein Bearbeitungswerkzeug. Weiter ist vorzugsweise eine Zufuhrleitung vorgesehen, die das Sauggerät mit dem Bearbeitungswerkzeug verbindet, sowie eine Saugleitung, die das Bearbeitungswerkzeug mit dem Sauggerät verbindet. Günstigerweise umfasst das Bearbeitungssystem mindestens ein Filterelement, um daran oder darin Material abzuscheiden. Von Vorteil ist es, wenn das Bearbeitungssystem mindestens eine Verpackungseinheit der vorstehend beschriebenen Art umfasst.

Eine Verwendung sieht vor, mindestens ein Enthärtungsmedium im Flüssigkeitskreislauf, in dem eine Reinigungsflüssigkeit umgewälzt wird, eines Bearbeitungssystems zu verwenden, bei welchem Bearbeitungssystem mit einem Bearbeitungswerkzeug Material abgetragen und einem Sauggerät zugeführt und darin abgeschieden wird.

Die nachfolgende Beschreibung bevorzugter Ausführungsformen dient im Zusammenhang mit der Zeichnung der näheren Erläuterung der Erfindung. Es zeigen:
- Figur 1:: eine schematische Darstellung eines Bearbeitungssystems, umfassend ein Sauggerät und ein Bearbeitungswerkzeug, die über eine Zufuhrleitung und eine Saugleitung für Reinigungsflüssigkeit miteinander verbunden sind;
- Figur 2:: eine schematische Darstellung einer Verpackungseinheit, umfassend ein Filterelement und ein portioniert verpacktes Enthärtungsmedium;
- Figur 3:: eine weitere Verpackungseinheit mit einem Filterelement und portioniert verpacktem Enthärtungsmedium;
- Figur 4:: eine weitere Verpackungseinheit;
- Figur 5:: eine weitere Verpackungseinheit; und
- Figur 6:: eine schematische Darstellung eines Filterelementes einer Verpackungseinheit zusammen mit einem portioniert verpackten Enthärtungsmedium.

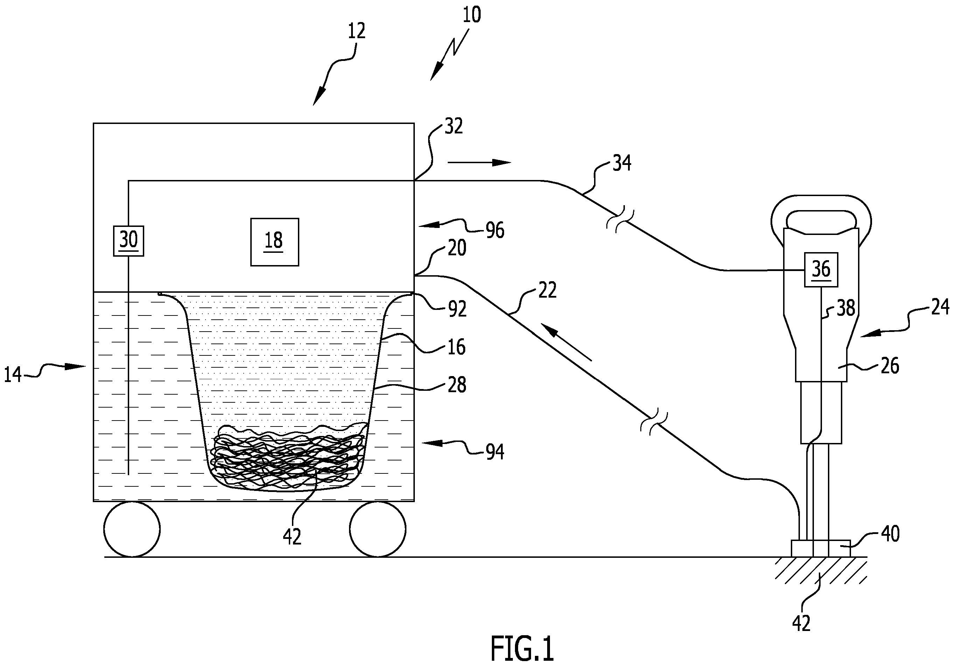

Figur 1 zeigt in schematischer Darstellung eine insgesamt mit dem Bezugszeichen 10 belegte vorteilhafte Ausführungsform eines Bearbeitungssystems.

Das Bearbeitungssystem 10 umfasst ein Sauggerät 12, das einen Schmutzbehälter 14 aufweist. Im Schmutzbehälter 14 kann ein Filterelement 16 angeordnet werden, zum Beispiel in diesen eingelegt oder eingehängt werden.

Der Schmutzbehälter 14 kann mittels eines Saugaggregates 18 mit Unterdruck beaufschlagt werden. Dies gibt die Möglichkeit, über einen Saugeinlass 20, an den eine Saugleitung 22 angeschlossen ist, eine Reinigungsflüssigkeit und davon mitgeführtes Material einzusaugen.

Das Material wird mittels eines Bearbeitungswerkzeugs 24, vorliegend in Gestalt eines Kernbohrgerätes 26, abgetragen. Die Saugleitung 22 ist an das Kernbohrgerät 26 angeschlossen.

Die Reinigungsflüssigkeit, vorliegend insbesondere Wasser, durchströmt das Filterelement 16. Das mitgeführte Material wird durch das Filterelement 16, vorliegend in Gestalt eines Beutels 28, zurückgehalten und darin gesammelt. Nach dem Arbeitsende kann der Beutel 28 zusammen mit dem abgeschiedenen Material entsorgt werden.

Die Porengröße des Filterelements 16 beträgt beispielsweise ungefähr 10 µm bis 100 µm, vorzugsweise ungefähr 15 µm bis 75 µm.

Die gefilterte Reinigungsflüssigkeit wird mittels eines Pumpaggregates 30 aus dem Schmutzbehälter 14 angesaugt und einem Auslass 32 des Sauggerätes 12 zugeführt. An den Auslass 32 ist eine Zufuhrleitung 34 angeschlossen, die mit dem Kernbohrgerät 26 verbunden ist. Die gefilterte Reinigungsflüssigkeit wird dem Kernbohrgerät 26 über die Zufuhrleitung 34 zugeführt.

Im Kernbohrgerät 26 durchströmt die Reinigungsflüssigkeit einen Wärmetauscher 36, über den das Kernbohrgerät 26 mittels der Reinigungsflüssigkeit gekühlt wird. Vom Wärmetauscher 36 führt eine Leitung 38 zur Bohrkrone 40 des Kernbohrgerätes 26, mit der das Material 42 abgetragen wird.

Das Bearbeitungssystem 10 wird insbesondere auf Baustellen eingesetzt, wobei Material 42 in den Flüssigkeitskreislauf überführt wird, das insbesondere Calciumcarbonat und Magnesiumcarbonat enthalten kann. Die Erfindung wird nachfolgend am Beispiel von Calciumcarbonat erläutert.

Calciumcarbonat löst sich im Wasser in Gestalt des einen Härtebildner darstellenden Kations Ca²⁺ und des Carbonations CO₃²⁻. Bei zunehmender Arbeitsdauer kann der Fall auftreten, dass die Löslichkeitsgrenze für Calciumcarbonat im Wasser erreicht ist. Dies kann dazu führen, dass festes Calciumcarbonat ausfällt und den Flüssigkeitskreislauf ganz oder teilweise verstopft.

Insbesondere könnte eine Verstopfung des Wärmetauschers 36 aufgrund der darin auftretenden Wärme und der damit verbundenen Verschiebung des Gleichgewichtes auftreten.

Für einen zuverlässigeren Betrieb des Bearbeitungssystems 10 ist vorgesehen, dass im Flüssigkeitskreislauf ein Enthärtungsmedium enthalten ist. Durch den Einsatz des besteht die Möglichkeit, mit dem Bearbeitungssystem mehr Material abzutragen, bevor es zum Ausfallen von Calciumcarbonat kommt. Die Wahrscheinlichkeit, dass der Flüssigkeitskreislauf dadurch zumindest teilweise blockiert wird, wird erheblich verringert.

Infolgedessen weist das Bearbeitungssystem 10 eine höhere Sicherheit gegenüber Ausfällen und einen geringeren Wartungsaufwand auf. Durch eine höhere Einsatzzeit wird die Benutzerakzeptanz gesteigert.

Das Enthärtungsmedium verringert, beispielsweise durch Komplexierung oder Ionenaustausch, die Härte im Wasser des Flüssigkeitskreislaufs, die durch die Ca²⁺-Ionen entsteht. Ca²⁺-Ionen werden aus der Lösung entfernt, indem sie in einem Komplex gebunden wurden oder durch andersartige Ionen ersetzt werden.

Das Enthärtungsmedium ist insbesondere im Wasser gelöst, es könnte jedoch auch in fester Form vorliegen.

Das Enthärtungsmedium ist oder umfasst zum Beispiel MGDA, GLDA, NTA, EDTA, DTPA, PDTA, ein Phosphat oder ein Phosphonat, ein Citrat, ein Zeolith oder ein Polycarboxylat.

Denkbar ist alternativ oder ergänzend, dass das Wasser des Flüssigkeitskreislaufes mittels Zitronensäure, Essigsäure oder einer mineralischen Säure wie zum Beispiel Salzsäure angesäuert wird. Hierdurch wird gelöstes Calciumcitrat, Calciumacetat oder Calciumchlorid gebildet, die jeweils eine höhere Löslichkeit aufweisen als Calciumcarbonat. Die Wahrscheinlichkeit wird verringert, dass Calciumcarbonat ausfällt.

Das Enthärtungsmedium kann, insbesondere bei der Inbetriebnahme des Bearbeitungssystems 10, dem Wasser im Flüssigkeitskreislauf zugegeben werden. Beispielsweise wird das Enthärtungsmedium in fester Form (z. B. als Pulver, Granulat, gepresst als Tablette oder als Salz) oder in flüssiger Form, zum Beispiel durch vorheriges Anrühren von der Bedienperson, insbesondere mit Wasser, in den Schmutzbehälter 14 eingebracht.

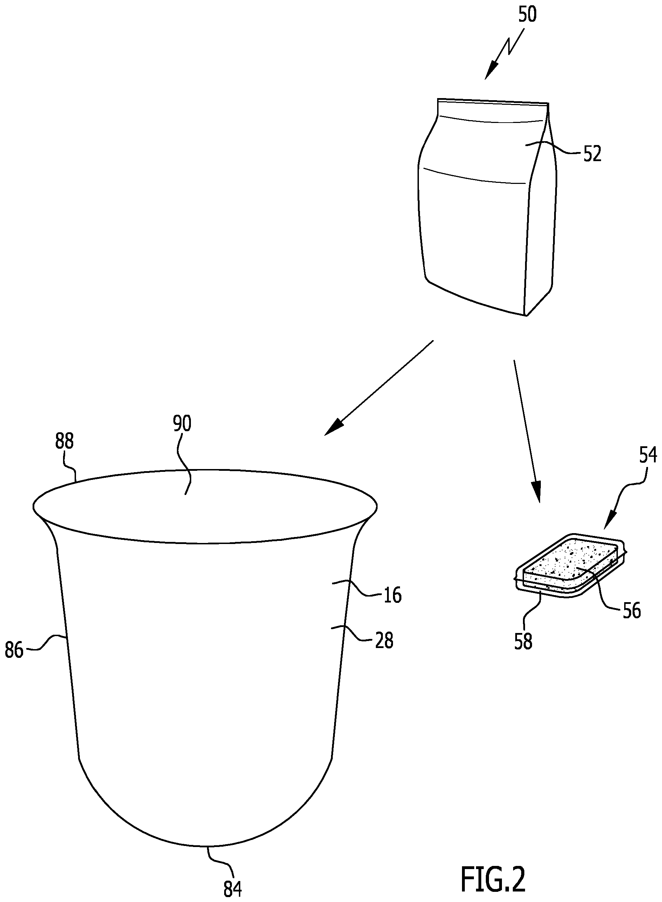

Figur 2 zeigt eine mit dem Bezugszeichen 50 belegte vorteilhafte Ausführungsform einer erfindungsgemäßen Verpackungseinheit. Die Verpackungseinheit 50 weist eine Packung 52 auf, die in verpackter Form ein Filterelement 16 aufnimmt, vorliegend einen Beutel 28. Darüber hinaus nimmt die Verpackung 52 eine Einheit 54 des Enthärtungsmediums 56 auf. Das Enthärtungsmedium 56 ist vorliegend in fester Form dargestellt, zum Beispiel als Pulver, als Granulat, gepresst als Tablette oder als Salz. Es könnte jedoch auch in flüssiger Form vorliegen.

Die Einheit 54 weist eine das Enthärtungsmedium 56 umgebende Umhüllung 58 auf. Die Umhüllung 58 ist vorliegend wasserlöslich.

Die Verpackungseinheit 50 ist benutzerfreundlich handhabbar. Die Bedienperson entnimmt der Verpackung 52 den Beutel 28 und ordnet diesen im Schmutzbehälter 14 an. Die Einheit 54 kann von der Bedienperson in den Schmutzbehälter 14 gelegt werden, wodurch der Bedienperson erspart bleibt, eine erforderliche Menge des Enthärtungsmediums 56 selbst zu ermitteln. Infolge der wasserlöslichen Umhüllung 58 tritt das Enthärtungsmedium 56 bei der Inbetriebnahme des Bearbeitungssystems 10 aus und löst sich im Wasser.

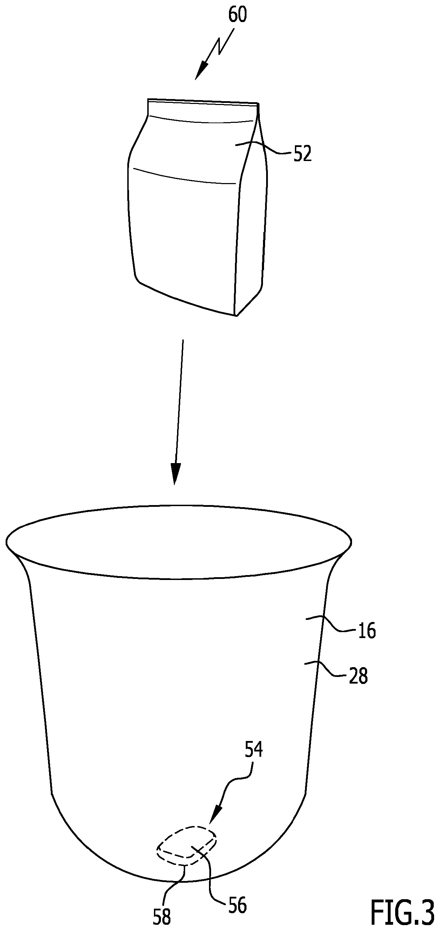

Eine weitere Verpackungseinheit mit dem Bezugszeichen 60 ist in Figur 3 schematisch dargestellt. Das mit der Umhüllung 58 versehene Enthärtungsmedium 56 ist dabei bereits in den Beutel 28 eingelegt. Beim ordnungsgemäßen Einsetzen des Beutels 28 in den Schmutzbehälter 14 ist dadurch sichergestellt, dass dem Flüssigkeitskreislauf eine geeignete Menge des Enthärtungsmediums 56 zugeführt wird.

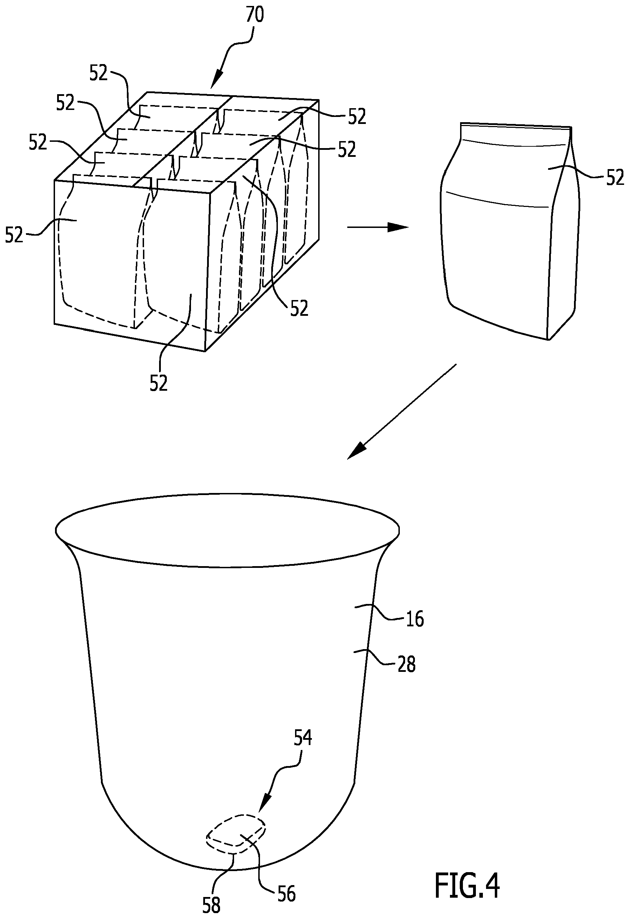

Figur 4 zeigt schematisch eine weitere bevorzugte Ausführungsform einer Verpackungseinheit, die mit dem Bezugszeichen 70 belegt ist. Die Verpackungseinheit 70 weist eine Mehrzahl von Packungen 52 mit einem jeweiligen Beutel 28 und einem jeweiligen, portioniert verpackten Enthärtungsmedium 56 auf. Wie bei der Verpackungseinheit 60 gemäß Figur 3 ist das Enthärtungsmedium 56 bereits in den Beutel 28 eingelegt.

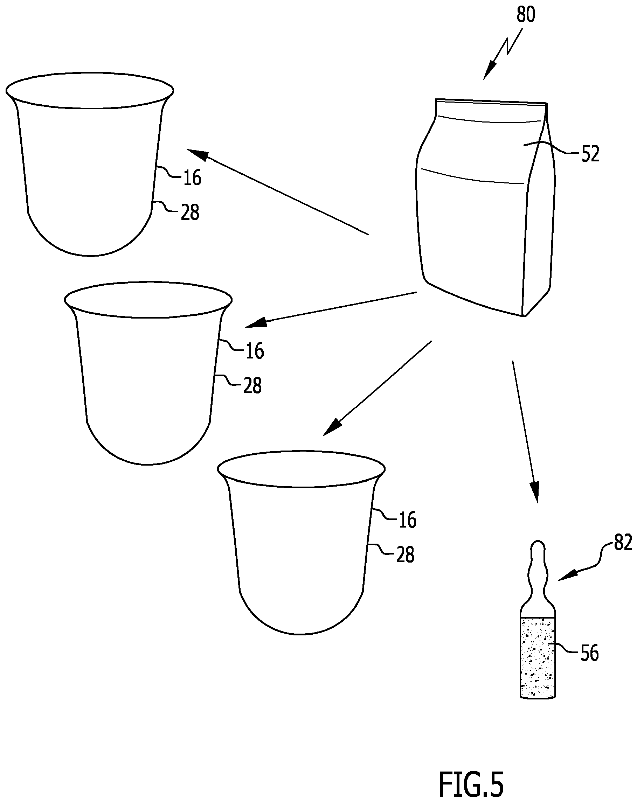

Eine weitere bevorzugte Ausführungsform der Verpackungseinheit ist in Figur 5 schematisch dargestellt und dort mit dem Bezugszeichen 80 belegt.

Die Verpackungseinheit 80 umfasst die Verpackung 52, die eine Mehrzahl von Beuteln 28 enthält. Beispielhaft sind vorliegend drei Stück dargestellt.

Weiter umfasst die Verpackung 52 ein Gebinde 82, in dem das Enthärtungsmedium 56 in flüssiger oder fester Form enthalten ist.

Die Bedienperson kann beim Einbringen des Enthärtungsmediums 56 in den Flüssigkeitskreislauf die hierfür erforderliche Menge aus dem Gebinde 82 entnehmen, das zu diesem Zweck bevorzugt wiederverschließbar ist. Die Menge des eingesetzten Enthärtungsmediums 58 kann insbesondere vom Einsatz des Bearbeitungssystems 10 und der Beschaffenheit des abzutragenden Materials 42 abhängen.

Der Beutel 28 bei den Ausführungsformen gemäß den Figuren 1 bis 5 ist tütenförmig ausgestaltet und umfasst eine Bodenwand 84 und eine Seitenwand 86. Die Seitenwand 86 umfasst der Bodenwand 84 gegenüberliegend einen Rand 88, der eine Öffnung 90 des Beutels 28 einfasst.

Der Rand 88 wird beispielsweise über einen Rand 92 eines Unterteils 94 des Sauggerätes 12 gestülpt, wie dies in Figur 1 rechts am Sauggerät 12 angedeutet ist, und mittels des auf das Unterteil 94 aufgesetzten Oberteils 96 des Sauggerätes 12 fixiert.

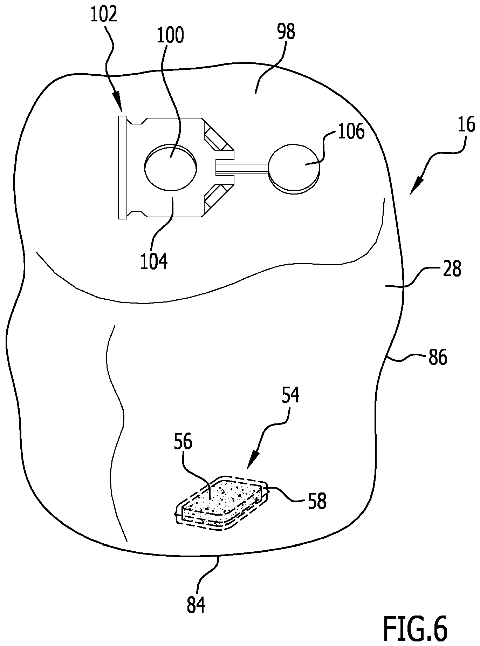

Figur 6 zeigt eine andersartige Variante der Ausgestaltung eines Filterelementes 16, ebenfalls in Form eines Beutels 28. Der in Figur 6 dargestellte Beutel 28 kann Bestandteil einer Verpackungseinheit sein und anstelle des bislang beschriebenen Beutels 28 bei dem erfindungsgemäßen Verfahren eingesetzt werden.

Der Beutel 28 gemäß Figur 6 ist im Wesentlichen geschlossen, wobei der Bodenwand 84 eine obere Wand 98 gegenüberliegt. Anstelle der verhältnismäßig großen Öffnung 90 weist der Beutel 28 eine Eingriffsöffnung 100 von vergleichsweise geringem Querschnitt auf, zum Beispiel mit einem Durchmesser von einigen Zentimetern.

Die Eingriffsöffnung 100 ist so bemessen, dass ein Saugstutzen, der in den Schmutzbehälter 14 ragt, durch die Eingriffsöffnung 100 hindurch in den Beutel 28 eingreifen kann.

Der Beutel 28 weist ferner ein Halteelement 102 auf, mit dem der Beutel durch Kraft- und/oder Formschluss am Unterteil 94 fixiert werden kann, wobei an diesem ein korrespondierend ausgestaltetes Halteelement vorhanden ist. Im vorliegenden Fall bildet das Halteelement 102 einen Rand 104 der Eingriffsöffnung 100. Ein Ausreißen des Beutels 28 an der Eingriffsöffnung 100 kann dadurch auch bei hoher Beladung vermieden werden.

Zusätzlich umfasst der Beutel ein Abdeckelement 106, mit dem die Eingriffsöffnung 100 verschlossen werden kann, insbesondere beim Entnehmen des Beutels 28 aus dem Sauggerät 12. Das Enthärtungsmedium 56 mit der Umhüllung 58 ist beim Beutel 28 gemäß Figur 6 ebenfalls bereits im Beutel aufgenommen. Es versteht sich, dass das Enthärtungsmedium 56 so dargereicht werden kann, wie dies vorstehend mit Verweis auf die Figuren 2 bis 5 unter Erläuterung der Verpackungseinheiten 50, 60, 70 oder 80 beschrieben wurde. Anstelle von deren Beutel 28 kann selbstverständlich der in Figur 6 dargestellte und zuletzt beschriebene Beutel 28 zum Einsatz kommen.

### Bezugszeichenliste:

- 10: Bearbeitungssystem
- 12: Sauggerät
- 14: Schmutzbehälter
- 16: Filterelement
- 18: Saugaggregat
- 20: Saugeinlass
- 22: Saugleitung
- 24: Bearbeitungswerkzeug
- 26: Kernbohrgerät
- 28: Beutel
- 30: Pumpaggregat
- 32: Auslass
- 34: Zufuhrleitung
- 36: Wärmetauscher
- 38: Leitung
- 40: Bohrkrone
- 42: Material
- 50: Verpackungseinheit
- 52: Verpackung
- 54: Einheit
- 56: Enthärtungsmedium
- 58: Umhüllung
- 60: Verpackungseinheit
- 70: Verpackungseinheit
- 80: Verpackungseinheit
- 82: Gebinde
- 84: Bodenwand
- 86: Seitenwand
- 88: Rand
- 90: Öffnung
- 92: Rand
- 94: Unterteil
- 96: Oberteil
- 98: obere Wand
- 100: Eingriffsöffnung
- 102: Halteelement
- 104: Rand
- 106: Abdeckelement

## Patentansprüche

1. Verfahren zum Betreiben eines Bearbeitungssystems (10), bei dem mit einem Bearbeitungswerkzeug (24) Härtebildner umfassendes Material (42) abgetragen und einem mit dem Bearbeitungswerkzeug (24) über einen Flüssigkeitskreislauf, in dem eine Reinigungsflüssigkeit umgewälzt wird, verbundenen Sauggerät (12) zugeführt und darin abgeschieden wird, wobei mindestens ein Enthärtungsmedium (56) im Flüssigkeitskreislauf enthalten ist, wobei das mindestens eine Enthärtungsmedium (56) ortsfest im Flüssigkeitskreislauf eingesetzt wird und/oder wobei das mindestens eine Enthärtungsmedium (56) der Reinigungsflüssigkeit bei Inbetriebnahme des Bearbeitungssystems zugegeben wird.

2. Verfahren nach Anspruch 1, **dadurch gekennzeichnet, dass** mittels des mindestens einen Enthärtungsmediums (56) die Carbonathärte in der Reinigungsflüssigkeit verringert wird.

3. Verfahren nach einem der voranstehenden Ansprüche, **dadurch gekennzeichnet, dass** das mindestens eine Enthärtungsmedium (56) ein Komplexbildner ist oder einen solchen umfasst.

4. Verfahren nach einem der voranstehenden Ansprüche, **dadurch gekennzeichnet, dass** das mindestens eine Enthärtungsmedium (56) ein Ionenaustauschmedium ist oder ein solches umfasst.

5. Verfahren nach einem der voranstehenden Ansprüche, **dadurch gekennzeichnet, dass** das mindestens eine Enthärtungsmedium einer der folgenden Stoffe ist oder umfasst:
- MGDA (Methylglycindiessigsäure Trinatriumsalz);
- GLDA (Tetranatrium-N,N-bis(carboxylatomethyl)-L-glutamat);
- NTA (Nitrilotriessigsäure);
- EDTA (Ethylendiamintetraessigsäure);
- DTPA (Diethylentriaminpentaessigsäure);
- PDTA (Propylendiamintetraessigsäure);
- ein Phosphat oder Phosphonat;
- ein Citrat;
- ein Zeolith;
- ein Polycarboxylat.

6. Verfahren nach einem der voranstehenden Ansprüche, **dadurch gekennzeichnet, dass** die Reinigungsflüssigkeit angesäuert wird, beispielsweise durch Zitronensäure, Essigsäure oder eine mineralische Säure.

7. Verfahren nach einem der voranstehenden Ansprüche, **dadurch gekennzeichnet, dass** das mindestens eine Enthärtungsmedium (56) mit der Reinigungsflüssigkeit im Flüssigkeitskreislauf mitgeführt wird.

8. Verfahren nach einem der voranstehenden Ansprüche, **dadurch gekennzeichnet, dass** das mindestens eine Enthärtungsmedium (56) als Ionenaustauschmedium in einer Patrone eingesetzt wird, wenn das Enthärtungsmedium (56) ortsfest im Flüssigkeitskreislauf eingesetzt wird.

9. Verfahren nach einem der voranstehenden Ansprüche, **dadurch gekennzeichnet, dass** das mindestens eine Enthärtungsmedium (56) adsorptionshemmend ist.

10. Verfahren nach einem der voranstehenden Ansprüche, **dadurch gekennzeichnet, dass** das mindestens eine Enthärtungsmedium (56) der Reinigungsflüssigkeit in ungelöster Form oder in gelöster Form zugegeben wird.

11. Verfahren nach einem der voranstehenden Ansprüche, **dadurch gekennzeichnet, dass** der Bedienperson vom Bearbeitungssystem (10) ein Hinweis über die Zugabe des mindestens einen Enthärtungsmediums bereitgestellt wird.

12. Verfahren nach einem der voranstehenden Ansprüche, **dadurch gekennzeichnet, dass** ein von der Reinigungsflüssigkeit durchströmtes Filterelement (16) im Sauggerät eingesetzt wird, um das Material (42) abzuscheiden.

## Claims

1. Method for operating a processing system (10), in which material (42) comprising hardness formers is abrasively removed by means of a processing tool (24) and fed to, and separated in, a suction device (12) which is connected to the processing tool (24) via a liquid circuit in which a cleaning liquid is circulated, wherein at least one softening medium (56) is contained in the liquid circuit, wherein the at least one softening medium (56) is used at a fixed location in the liquid circuit and/or the at least one softening medium (56) is added to the cleaning liquid upon start-up of the processing system.

2. Method according to Claim 1, **characterized in that** the carbonate hardness in the cleaning liquid is reduced by means of the at least one softening medium (56).

3. Method according to either of the preceding claims, **characterized in that** the at least one softening medium (56) is a complexing agent or comprises such a complexing agent.

4. Method according to one of the preceding claims, **characterized in that** the at least one softening medium (56) is an ion-exchange medium or comprises such an ion-exchange medium.

5. Method according to one of the preceding claims, **characterized in that** the at least one softening medium is or comprises one of the following substances:
- MGDA (methylglycinediacetic acid trisodium salt);
- GLDA (tetrasodium N,N-bis(carboxymethyl)-L-glutamate);
- NTA (nitrilotriacetic acid);
- EDTA (ethylenediaminetetraacetic acid);
- DTPA (diethylenetriaminepentaacetic acid);
- PDTA (propylenediaminetetraacetic acid);
- a phosphate or phosphonate;
- a citrate;
- a zeolite;
- a polycarboxylate.

6. Method according to one of the preceding claims, **characterized in that** the cleaning liquid is acidified, for example by citric acid, acetic acid or a mineral acid.

7. Method according to one of the preceding claims, **characterized in that** the at least one softening medium (56) is carried along with the cleaning liquid in the liquid circuit.

8. Method according to one of the preceding claims, **characterized in that** the at least one softening medium (56) is used as ion-exchange medium in a cartridge when the softening medium (56) is used at a fixed location in the liquid circuit.

9. Method according to one of the preceding claims, **characterized in that** the at least one softening medium (56) is adsorption-inhibiting.

10. Method according to one of the preceding claims, **characterized in that** the at least one softening medium (56) is added in undissolved form or in dissolved form to the cleaning liquid.

11. Method according to one of the preceding claims, **characterized in that** the processing system (10) provides the operator with an indication about the addition of the at least one softening medium.

12. Method according to one of the preceding claims, **characterized in that** a filter element (16) through which the cleaning liquid flows is used in the suction device in order to separate the material (42).

## Revendications

1. Procédé d'exploitation d'un système de traitement (10), selon lequel de la matière (42) comprenant des agents de dureté est enlevée avec un outil de traitement (24) et amenée à un appareil d'aspiration (12) relié à l'outil de traitement (24) par l'intermédiaire d'un circuit de liquide dans lequel un liquide de nettoyage est mis en circulation, et y est séparée, au moins un agent adoucissant (56) étant contenu dans le circuit de liquide, l'au moins un agent adoucissant (56) étant utilisé de manière fixe dans le circuit de liquide et/ou l'au moins un agent adoucissant (56) étant ajouté au liquide de nettoyage lors de la mise en service du système de traitement.

2. Procédé selon la revendication 1, **caractérisé en ce que** la dureté des carbonates dans le liquide de nettoyage est réduite au moyen de l'au moins un agent adoucissant (56).

3. Procédé selon l'une quelconque des revendications précédentes, **caractérisé en ce que** l'au moins un agent adoucissant (56) est un agent complexant ou comprend un tel agent.

4. Procédé selon l'une quelconque des revendications précédentes, **caractérisé en ce que** l'au moins un agent adoucissant (56) est un agent échangeur d'ions ou comprend un tel agent.

5. Procédé selon l'une quelconque des revendications précédentes, **caractérisé en ce que** l'au moins un agent adoucissant est ou comprend l'une des substances suivantes :
- MGDA (sel trisodique de l'acide méthylglycinediacétique) ;
- GLDA (N,N-bis(carboxylatométhyl)-L-glutamate tétrasodique) ;
- NTA (acide nitrilotriacétique) ;
- EDTA (acide éthylènediaminetétraacétique) ;
- DTPA (acide diéthylènetriaminepentaacétique) ;
- PDTA (acide propylènediaminetétraacétique) ;
- un phosphate ou phosphonate ;
- un citrate ;
- une zéolite ;
- un polycarboxylate.

6. Procédé selon l'une quelconque des revendications précédentes, **caractérisé en ce que** le liquide de nettoyage est acidifié, par exemple par de l'acide citrique, de l'acide acétique ou un acide minéral.

7. Procédé selon l'une quelconque des revendications précédentes, **caractérisé en ce que** l'au moins un agent adoucissant (56) est entraîné avec le liquide de nettoyage dans le circuit de liquide.

8. Procédé selon l'une quelconque des revendications précédentes, **caractérisé en ce que** l'au moins un agent adoucissant (56) est utilisé en tant qu'agent échangeur d'ions dans une cartouche lorsque l'agent adoucissant (56) est utilisé de manière fixe dans le circuit de liquide.

9. Procédé selon l'une quelconque des revendications précédentes, **caractérisé en ce que** l'au moins un agent adoucissant (56) est inhibiteur d'adsorption.

10. Procédé selon l'une quelconque des revendications précédentes, **caractérisé en ce que** l'au moins un agent adoucissant (56) est ajouté au liquide de nettoyage sous forme non dissoute ou sous forme dissoute.

11. Procédé selon l'une quelconque des revendications précédentes, **caractérisé en ce que** le système de traitement (10) fournit à l'opérateur une indication sur l'ajout de l'au moins un agent adoucissant.

12. Procédé selon l'une quelconque des revendications précédentes, **caractérisé en ce qu'**un élément filtrant (16) traversé par le liquide de nettoyage est utilisé dans l'appareil d'aspiration pour séparer la matière (42).
